# EUROPEAN PATENT APPLICATION

(11) **EP 4 253 076 A1**
(43) Date of publication of application: **04.10.2023**
(21) Application number: 21896385.8
(22) Date of filing: 30.07.2021
(51) Int. Cl.: B42D 25/30, B42D 25/29

(54) **OPTICAL ANTI-COUNTERFEITING ELEMENT AND PRODUCT**

(30) Priority: 24.11.2020 CN 202011332152
(71) Applicant: Zhongchao Special Security Technology Co., Ltd, Beijing 100070 (CN); China Banknote Printing and Minting Corp., Beijing 100044 (CN)
(72) Inventor: CUI, Haibo, Beijing 100070 (CN); ZHANG, Baoli, Beijing 100070 (CN); ZHU, Jun, Beijing 100070 (CN); WANG, Xiaoli, Beijing 100070 (CN)
(74) Representative: Glawe, Delfs, Moll
(86) International application number: PCT/CN2021/109842
(87) International publication number: WO 2022/110878

(57) **Abstract**

Provided are an optical anti-counterfeiting element and a product thereof, the optical anti-counterfeiting element includes: a substrate (1); a reflective curved mirror array (21), located on a surface of the substrate; and a micro graphic-text array (22), formed on the reflective curved mirror array, the micro graphic-text array and the reflective curved mirror array are located in a same plane and are overlapped without an interval, and after the reflective curved mirror array samples to synthesize the micro graphic-text array with a coupling effect with the same, a dynamic effect is formed.

## Description

### Technical Field

The present invention relates to the technical field of anti-counterfeiting, and in particularly to an optical anti-counterfeiting element suitable for various high security products and high value-added products such as bank notes, credit cards, passports and securities, and a product using the optical anti-counterfeiting element, such as bank notes, credit cards, passports and securities.

### Background

Due to unique visual effect and easy identification, an optical anti-counterfeiting element is widely applied to high security products such as bank notes, credit cards, passports and securities and other high value-added products.

CN1906547B and CN101379423B disclose an anti-counterfeiting element with a micro lens array and a micro graphic-text array on both surfaces of a substrate respectively, the micro graphic-text array is located near a focal plane of the micro lens array, and a pattern with a certain depth of field or exhibiting dynamic effects is reproduced by the Moore magnification of the micro lens array on the micro graphic-text array.

CN104024921B discloses a transferable optical system with a reduced thickness, eliminating the need for optical spacers to provide the necessary focal distance between focusing elements and their associated micro graphic-text structures, the micro graphic-text structures are in contact with but not fully embedded within, in the process of engineering replication, the focusing elements and the micro graphic-text structures are respectively copied by UV glue casting, two nested UV glue casting replications are carried out, and the process requirement has high standards requirements for microstructure replication equipment and materials, increasing process difficulties.

CN1906547B discloses a film material, in an optical microstructure anti-counterfeiting element disclosed therein, a micro lens array and a micro graphic-text array are respectively located in respective planes, so that in the manufacturing process, it is necessary to first perform original edition preparation on the micro graphic-text array and the micro lens array respectively, and then perform batch replication on the micro graphic-text array and the micro lens array on both sides of the film substrate in the production process. The anti-counterfeiting element of this structure has the disadvantages that: (1) the structure requires that the micro lens array and the micro graphic-text array are arranged periodically, and the periodic error is in a submicron level during original edition preparation, so the manufacturing difficulty is high; (2) in the production process, it is necessary to respectively process two surfaces of the substrate in sequence, so the process flow is complex; (3) in the production process, the problem of alignment of the micro lens array and the micro graphic-text array needs to be solved, so the process controllability is low; (4) because the strict alignment of the micro graphic-text array and the micro lens array cannot be ensured in the production process, some anti-counterfeiting effects cannot be expected or even cannot be realized.

### Summary

Aiming at above-mentioned defects of the related art, the present invention provides an optical anti-counterfeiting element and a product using the optical anti-counterfeiting element, which is able to overcome the above-mentioned defects, and the optical anti-counterfeiting element and the product using the optical anti-counterfeiting element provided by the present invention do not need to align a micro lens array and a micro graphic-text array in the production process.

In order to achieve the above purpose, some embodiments of the present invention provide an optical anti-counterfeiting element, including: a substrate; a reflective curved mirror array, located on a surface of the substrate; and a micro graphic-text array, formed on the reflective curved mirror array, the micro graphic-text array and the reflective curved mirror array are located in a same plane and are overlapped without an interval, and after the reflective curved mirror array samples and synthesizes the micro graphic-text array with a coupling effect with the reflective curved mirror array, a dynamic effect is formed.

The reflective curved mirror array is a periodic array, a local periodic array, an aperiodic array and/or a random array including a plurality of curved surface units, and the micro graphic-text array is the periodic array, the aperiodic array or the random array with a coupling effect matched with the reflective curved mirror array.

A specific arrangement form of the micro graphic-text unit is the periodic array and/or the aperiodic array, which is jointly determined by an arrangement form of a reflective curved surface sampling tool and a macro animation effect to be achieved. When the macro animation effect is horizontal translation, vertical translation, orthogonal translation, floating and sinking, the micro graphic-text array is periodic; and when the dynamic effect is zoom, dual-channel and stereo, a light reflected into human eyes at each angle is different, that is, the micro graphic-text array is aperiodic, or random. It is to be noted that a sampling synthesis process of the reflective curved mirror array on the micro graphic-text array described in the present invention finally forms sampling synthesis images, which are macro synthesis images that are able to be directly observed by human eyes and specifically form a plurality of dynamic effects, including translation, dual-channel, multi-channel, animation and stereo.

Since a function of a reflective curved surface is to reflect light into human eyes, its morphology is smooth and continuous, and a reflective curved mirror of the reflective curved mirror array includes a concave mirror and/or a convex mirror.

A base of the reflective curved mirror of the reflective curved mirror array is one or any combination of the following: circular, elliptical, polygonal, or infinitely extending in a direction within a surface (i.e., manifested as a cylindrical lens).

A cross section of the reflective curved mirror of the reflective curved mirror array is one or any combination of the following: circular, elliptical, polygonal, serrated, parabolic and sinusoidal.

The reflective curved mirror array is one-dimensional or two-dimensional.

A micro graphic-text unit of the micro graphic-text array is a groove, a plane or a protrusion.

A microstructure is distributed in the groove or on the protrusion, so that a light reflection intensity contrast is generated between a micro graphic-text region and a reflective curved mirror region.

The microstructure is any one of the following: a one-dimensional submicro structure, a two-dimensional submicro structure and a structural color, which are able to be colored in combination with a metal coating or an optically variable coating mentioned below to form a color contrast with a region outside the groove or the protrusion.

When the micro graphic-text unit is the groove or the protrusion, its cross section is any of the following: rectangle, serrate, triangle and sinusoidal waveform.

The optical anti-counterfeiting element further includes a first color function layer and a second color function layer respectively located on the micro graphic-text array and the reflective curved mirror array.

In the case that the micro graphic-text unit of the micro graphic-text array is the groove or the protrusion, colors of the first color function layer and the second color function layer are the same or different. In this case, the first color function layer and the second color function layer are able to present a color saturation contrast according to an unevenness of the groove or the protrusion, so as to achieve coloring.

In the case that the micro graphic-text unit of the micro graphic-text array is the plane, colors of the first color function layer and the second color function layer are different. In this case, coloring is achieved by filling different pigments.

The first color function layer and the second color function layer include one or any combination of the following: a mono-layer coating, a multi-layer coating, an ink, a pigment and a dye.

The first color function layer and the second color function layer have a diffractive optically variable feature, an interferential optically variable feature, a micro-nano structure feature, a printing feature, a partial metallization feature, a fluorescence feature and/or a magnetic, optical, electrical and radioactive feature configured for machine reading.

The optical anti-counterfeiting element further includes a reflective layer, located on the micro graphic-text array and the reflective curved mirror array.

The reflective layer is one or any combination of the following: a mono-layer metal coating, a multi-layer metal coating, a coating formed by an absorption sublayer, a low refractive index dielectric sublayer and a reflective sublayer, a coating with high refractive index dielectric layer, a coating of multi-dielectric sublayer formed by a first high refractive index dielectric sublayer, a low refractive index dielectric sublayer and a second high refractive index dielectric sublayer stacked in sequence, and a coating formed by the absorption sublayer, a high refractive index dielectric sublayer and the reflective sublayer stacked in sequence.

A period of the reflective curved mirror array is 5µm to 200µm.

A line width of the micro graphic-text unit of the micro graphic-text array is 0.2µm to 100µm.

The substrate is a colored or colorless film transparent to visible light composed of one or more of the following materials: polyethylene terephthalate, polyvinyl chloride, polyethylene, polycarbonate, polypropylene, metal, glass and paper.

In some other embodiments, the present invention provides an optical anti-counterfeiting product, which includes the optical anti-counterfeiting element described above.

Through the above technical solution, the micro graphic-text array and the reflective curved mirror array are located in a same plane and are overlapped without an interval; and after the reflective curved mirror array samples and synthesizes the micro graphic-text array with a coupling effect with the reflective curved mirror array, an optical dynamic and a stereo effect is formed. In this way, a manufacturing difficulty of the micro lens array and the micro graphic-text array and a need for strict alignment between each other are solved, process controllability is improved, and an expected anti-counterfeiting effect is guaranteed.

Further features and advantages of the embodiments of the present invention will be explained in detail in the detailed description which follows.

### Brief Description of the Drawings

The drawings are configured to provide a further understanding of the embodiments of the present invention and constitute a part of the specification, and explain the embodiments of the present invention together with the following detailed description but do not constitute a limitation of the embodiments of the present invention. In the drawings:
Fig. 1a is a top view of an optical anti-counterfeiting element according to an embodiment of the present invention.
Fig. 1b is a cross-sectional view of an optical anti-counterfeiting element according to an embodiment of the present invention.
Fig. 1c is an optical schematic diagram of an optical anti-counterfeiting element according to an embodiment of the present invention.
Fig. 2a is a micro graphic-text design diagram of an optical anti-counterfeiting element according to an embodiment of the present invention.
Fig. 2b is a top view of an optical anti-counterfeiting element according to an embodiment of the present invention.
Fig. 3 is a cross-sectional view of an optical anti-counterfeiting element according to an embodiment of the present invention.
Fig. 4 is a cross-sectional view of a region between micro graphic-text strokes of an optical anti-counterfeiting element according to an embodiment of the present invention.
Fig. 5a is a schematic diagram of a micro graphic-text design method of an optical anti-counterfeiting element according to an embodiment of the present invention.
Fig. 5b is a macro reproduction diagram of an optical anti-counterfeiting element according to an embodiment of the present invention.
Fig. 6a is a schematic diagram of a micro graphic-text design method of an optical anti-counterfeiting element according to an embodiment of the present invention.
Fig. 6b is a macro reproduction diagram of an optical anti-counterfeiting element according to an embodiment of the present invention.
Fig. 7 is a macro reproduction diagram of an optical anti-counterfeiting element according to an embodiment of the present invention.
Fig. 8a is a top view of an optical anti-counterfeiting element according to an embodiment of the present invention.
Fig. 8b is a cross-sectional view of an optical anti-counterfeiting element according to an embodiment of the present invention.
Fig. 9a is a top view of an optical anti-counterfeiting element according to an embodiment of the present invention.
Fig. 9b is a top view of an optical anti-counterfeiting element according to an embodiment of the present invention.

Reference numerals:
1. a substrate; 2. a surface of substrate; 21. a reflective curved mirror array; 22. a micro graphic-text array; 23. a reflective layer; 41. a pigment function layer; 42. a structural color; and 43. a sub-wavelength structure.

### Detailed Description of the Embodiments

An optical anti-counterfeiting element and a product using the optical anti-counterfeiting element of the present invention will be described in detail below with reference to the drawings. It should be understood that the drawings and detailed descriptions are only descriptions of specific embodiments of the present invention and are not intended to limit the protection scope of the present invention in any way. Moreover, those skilled in the art should understand that the gray scale and size ratio in all the drawings are only schematic and do not represent the actual color and size ratio.

In the description of the present invention, terms "first" and "second" are only adopted for description and should not be understood to indicate relative importance or implicitly indicate the number of indicated technical features. Therefore, unless otherwise specified, the features defined as "first" and "second" explicitly or implicitly include one or more of these features; and "multiple" means two or more. The term "comprising" and any variation thereof means non-exclusive inclusion, and one or more other features, integers, steps, operations, units, components and/or combinations thereof may be present or added.

In addition, terms of orientation or position relationships indicated by terms "center", "horizontal", "upper", "lower", "left", "right", "vertical", "horizontal", "top", "bottom", "inner", "outer", and the like described based on orientation or relative position relationships shown in the drawings, are adopted not to indicate that indicated devices or components must be in specific orientations or structured and operated in specific orientations but only to conveniently and simply describe the present invention and thus should not be understood as limits to the present invention.

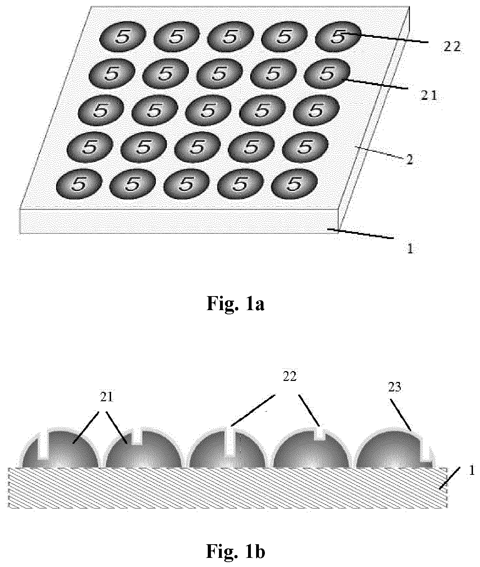

Fig. 1a is a top view of an optical anti-counterfeiting element according to an embodiment of the present invention, and Fig. 1b is a cross-sectional view of an optical anti-counterfeiting element according to an embodiment of the present invention. As shown in Figs. 1a and 1b, an embodiment of the present invention provides an optical anti-counterfeiting element, including a substrate 1 and a reflective curved mirror array 21 located on a substrate surface 2; a micro graphic-text array 22 formed on the reflective curved mirror array; and a reflective layer 23 located on the micro graphic-text array 22 and the reflective curved mirror array 21. The micro graphic-text array 22 and the reflective curved mirror array 21 are located in a same plane and are overlapped without an interval in spatial position. As shown in Figs. 1b, the micro graphic-text array 22 is shown in a cross-sectional view as a groove in the reflective curved mirror array 21, the groove is formed by etching (e.g., laser etching) the reflective curved mirror array 21, thereby reflecting a morphology of the micro graphic-text array 22. Therefore, the micro graphic-text array 22 is embedded in the reflective curved mirror array 21, and is located in the same plane with the reflective curved mirror array 21. When the reflective curved mirror array 21 and the micro graphic-text array 22 have an array coupling effect, the reflective curved mirror array 21 spatially samples the micro graphic-text array 22, and a macro optical image and dynamic feature are synthesized after reflection into human eyes by the reflective layer 23.

A top view of the optical anti-counterfeiting element is shown in Fig. 1a, and a cross-sectional view is show in Fig. 1b, Figs. 1a and 1b show a spatial arrangement rule between the curved mirror array and the micro graphic-text array in a periodic example. It is to be noted that the reflective layer 23 is only configured to achieve a better viewing effect and is not necessary.

To produce any animation effect, a general micro graphic-text array design method is required, which includes the following three steps.
(1) Determining macro magnified images F(θi, ϕj) seen at each observation angle, θ and ϕ are an inclination angle of a sample rotating along the y axis and an inclination angle of the sample rotating along the x axis respectively, i and j are serial numbers of animation frames of the sample rotating along the y axis and the x axis respectively, with a range of i and j set as 1, 2, 3...M. That is, M frames are respectively taken in the x and y directions, and a total number of frames is M*M frames.
(2) Pixelating each of the macro images F(θi, ϕj) according to an actual size of the macro magnified image and a size of microsampling tools, and each pixel corresponds to one of the microsampling tools; for example, if the macro magnified image is a square with a side length L and a spacing distance between the microsampling tools is p, then a number of the microsampling tools included in the length of L is N=L/p. Each of the macro magnified images F(θi, ϕj) is scaled to N*N pixels to achieve that each pixel corresponds to one of the microsampling tools.
(3) Projecting each pixel to a micro graphic-text region corresponding to the microsampling tools according to the observation angle. A design of the micro graphic-text region array is completed after traversing all macro images and all microsampling tools.

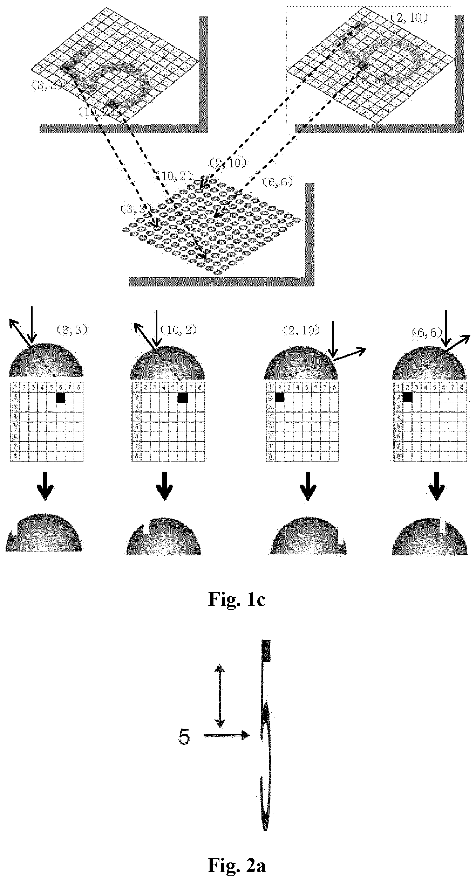

According to the above animation design principle, Fig. 1c shows a design process of the reflective curved mirror array and the micro graphic-text array. Taking a cylindrical lens as an example, its macro magnified image "5" consists of 12*12 pixels, each pixel corresponding to a contribution of one of the microsampling tools. A pixel (m, n) in row m and column n corresponds to a position under a microsampling tool in row m and column n, and the position is determined by frame numbers i and j of the observation angles θ and ϕ corresponding a macro magnified image F(θi, ϕj) under consideration. A value of the pixel (m, n) is assigned to the pixel (i, j) of the micro graphic-text array through the observation angle (θi, ϕj) corresponding to F(θi, ϕj). A total micro graphic-text information including (M*N)² micropixels is generated by traversing M*M macro magnified images under the observation angles θ and ϕ and N*N microsampling tools involved.

It is to be specifically noted that the present invention relates to a principle of sampling synthesis between a reflective element array and the micro graphic-text array, and a motion direction, a floating direction and a sinking direction of the macro magnified images are opposite to a design direction of the refractive principle mentioned above. In a sampling array, a defect position is able to form a continuous image, and a macro color feature thereof are: if a light reflected by a curved mirror enters human eyes, a bright background is formed; and if a light at graphic-text strokes of the micro graphic-text array is unable to enter human eyes, a dark image is formed.

It should be noted that a degree of spatial overlap without an interval between the micro graphic-text and the curved mirror, that is, a positional depth of a micro graphic-text distribution in a cross section of the curved mirror does not change a gray level of the dark image. However, in practical application, the micro graphic-text overlaps a surface of the curved mirror as much as possible without an interval. In some embodiments, a depth of the micro graphic-text from the surface of the curved mirror is less than 1µm , so that after the surface of the curved mirror is covered with a reflective layer (for example, a metal coating), a definition of a macro synthesis image is better.

The reflective curved mirror array is a periodic array or a local periodic array including a plurality of curved mirror units, and the micro graphic-text array with a coupling effect matched with the reflective curved mirror array is the periodic array or an aperiodic array. The reflective curved mirror array is also the aperiodic array and/or a random array including the plurality of curved surface units, and the micro graphic-text array with a coupling effect matched with the reflective curved mirror array is the aperiodic array or the random array.

A ghost is an inevitable existence of the micro graphic-text array after the reflective curved mirror array is sampled and synthesized, which should be avoided as much as possible in optical effects, otherwise it will lead to an image blur. Due to a defect of an equipment manufacturing process, a smoothness of a reflective curved surface is not enough, during the curved mirror sampling the micro graphic-text, phenomenons such as an erroneous sampling, a repeated sampling and the like occur, which lead to an occurrence of a ghost phenomenon. In order to avoid the above problems, it is necessary to adopt a curved mirror array design with a simple arrangement law as much as possible. In some embodiments, the reflective curved mirror array is a rectangular array and a hexagonal array. More specifically, the rectangular array is adopted in the embodiment.

In some embodiments, a period of the reflective curved mirror array is 5µm to 200µm. More specifically, the period of the reflective curved mirror array is 25µm in the embodiment. In some embodiments, a line width of the micro graphic-text unit is 0.2µm to 100µm. More specifically, the line width of the micro graphic-text unit is 2µm in the embodiment.

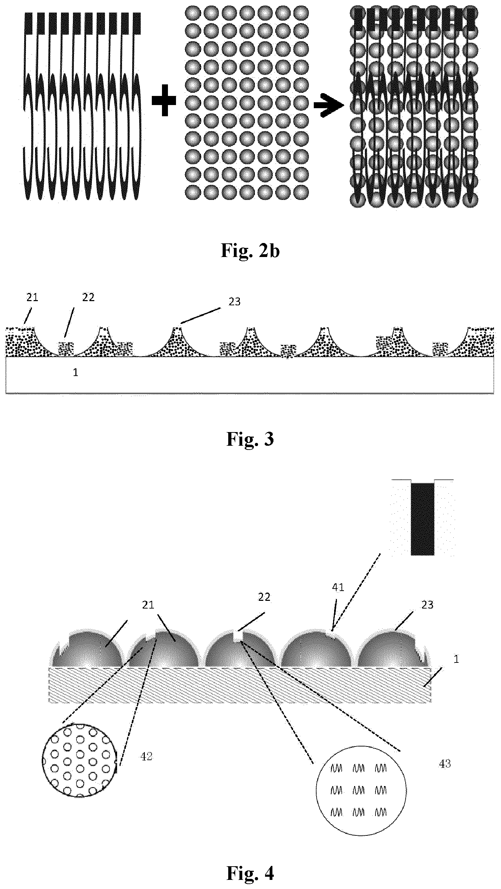

Fig. 2a is a micro graphic-text design diagram of an optical anti-counterfeiting element according to an embodiment of the present invention, and Fig. 2b is a top view of an optical anti-counterfeiting element according to an embodiment of the present invention. The optical anti-counterfeit element includes: a cylindrical graphic-text array, and a reflective spherical lens array, and the cylindrical graphic-text array is embedded in the reflective spherical lens array, as shown in Fig. 2b. Fig. 2a shows an arrangement mode of a cylindrical graphic-text, that is, a number "5", a width is unchanged in a horizontal direction, and is stretched in a vertical direction, and a stretching length is a macro size, which is consistent with a size of an actual optical effect.

It should be noted that a use of a two-dimensional spherical lens and a two-dimensional micro graphic-text array (a arrangement mode of the micro graphic-text is consistent with that of a spherical lens, only a graphic-text period and a graphic-text angle have some changes microscopically) has a requirement for an observation light source. Under a condition of point light source, the optical effect is the best, when there are a plurality of light sources in the environment, a plurality of images will be formed, and overlap will occur, resulting in blur. Therefore, in the embodiment, the arrangement mode of the cylindrical graphic-text is adopted, a magnification effect only exists in one direction, and the other direction is not affected by the light source, so that an actual optical effect becomes clearer and more variable.

In some embodiments, a period of the reflective curved mirror array is 5µm to 200µm. More specifically, the period of the reflective curved mirror array is 25µm in the embodiment. In some embodiments, a period of the cylindrical graphic-text is 5µm to 200µm. More specifically, the period of the cylindrical graphic-text is 24.9µm in the embodiment. In some embodiments, a line width of the micro graphic-text unit is 0.2µm to 100µm. More specifically, the line width of the micro graphic-text unit is 2µm in the embodiment.

For a reflective curved mirror in the reflective curved mirror array, it is a concave mirror and/or a convex mirror, the above Fig. 1b shows the case that it is the convex mirror, and the following Fig. 3 shows the case that it is the concave mirror, and specifically shows a cross-sectional view of a concave reflective mirror array according to an embodiment of the present invention. As shown in Fig. 3, the optical anti-counterfeiting element includes: a substrate 1 and a reflective curved mirror array 21 located on a substrate surface; a micro graphic-text array 22 formed on the reflective curved mirror array, and a reflective layer 23 covering a surface of the reflective curved mirror array.

It should be noted that after a surface of a reflective convex mirror is covered with a metal coating, two-sided observation is able to be achieved. For an example of the optical anti-counterfeiting element in Fig. 1b, when observed from a bottom of the substrate upward, a cross-sectional view of a microstructure is shown in Fig. 3. A contribution of a surface of a curved surface to a sampling of the micro graphic-text array is to realize a selection of the micro graphic-text under different angles, the concave mirror or the convex mirror has the same contribution to angle selection, so optical effects of macro images formed by the convex mirror and the concave mirror are roughly the same.

It should be noted that a distribution of the micro graphic-text array on the curved mirror is a groove, or a protrusion, or a plane with a color function layer, or a small size structure filling a groove or a protrusion of a graphic-text stroke. In some embodiments, the micro graphic-text structure is the groove or the protrusion. More specifically, the protrusion as the micro graphic-text array structure is adopted in the embodiment.

In some embodiments, a period of the reflective curved mirror array is 5µm to 200µm. More specifically, the period of the reflective curved mirror array is 25µm in the embodiment. In some embodiments, a line width of the micro graphic-text unit is 0.2µm to 100µm . More specifically, the line width of the micro graphic-text unit is 2µm in the embodiment.

Fig. 4 shows a cross-sectional view that filling a small size structure or not filling any small size structure in a groove of a micro graphic-text and forms a graphic-text with color contrast by combining with a color function layer.

As shown in Fig. 4, the optical anti-counterfeiting element includes: a substrate 1 and a reflective curved mirror array 21 located on a substrate surface; a micro graphic-text array 22 formed on the reflective curved mirror array, and a reflective layer 23 covering surfaces of the reflective curved mirror array 21 and the micro graphic-text array 22, and a pigment function layer 41, a structural color 42, and a sub-wavelength structure 43 filling a groove of the micro graphic-text array 22.

Objectively, the human eyes are not very sensitive to a dark image visually, in order to form a graphic-text with a bright color feature, a micro graphic-text stroke is filled with small size structures, combined with a diffraction effect, an interference effect, a microstructure effect, a pigment coating and the like of the metal coating and the microstructure, a coloring of the micro graphic-text stroke is able to be realized.

It should be noted that the a small size microstructure needs to attach to a large size structure, only when homomorphically covering, namely, the micro graphic-text stroke formed by the small size microstructure attaches to a surface or an inside of the curved mirror, a morphology of the groove of the micro graphic-text stroke has the same curvature as that of the curved mirror. Light reflected by the curved mirror is able to be reflected into the human eyes, and under a specific optical principle, a structural color is formed, so as to form an optical magnification effect of color.

The above small size structure is any of the following: a one-dimensional submicro structure (sinusoidal in the figure), a two-dimensional submicro structure (sinusoidal in the figure), a structural color (circular in the figure), and a coating layer. The small size structure is colored in combination with the reflective layer 23 (for example, a metal coating or an optically variable coating) to form a color contrast with a region outside a groove structure.

The color function layer includes one or any combination of the following: a mono-layer coating, a multi-layer coating, an ink, a pigment and a dye.

It should be noted that a first color function layer and a second color function layer are arranged on surfaces of the micro graphic-text array and the reflective curved mirror array respectively. The above micro graphic-text unit is a groove, a protrusion, or a plane. In the case that the micro graphic-text unit is the groove or the protrusion, the first color function layer and the second color function layer are the same or different. The first color function layer and the second color function layer are able to present a color saturation contrast according to an unevenness of the groove or the protrusion, so as to achieve coloring. When the micro graphic-text unit is the plane, the first color function layer and the second color function layer are arranged on the surfaces of the micro graphic-text array and the reflective curved mirror array respectively, and the first color function layer and the second color function layer are different. In this case, coloring is achieved by filling different pigments.

When the small size structure is the sub-wavelength structure 43, it is a one-dimensional grating or a two-dimensional grating, and a groove type of the sub-wavelength structure is sinusoidal, rectangular, serrated, etc; and a grid distribution of the two-dimensional grating is an orthogonal structure, a honeycomb structure, a two-dimensional bravais lattice structure, a random structure, etc. It should be understood that the sub-wavelength structure is not limited to the structures described above, and that a splicing or a combination of these sub-wavelength structures is able to be adopted in a practical optical anti-counterfeiting element. One way of the splicing or the combination includes a reflective curved mirror and a secondary structure located on the reflective curved mirror, and the secondary structure is a two-dimensional sub-wavelength structure. In order to satisfy a plasma absorption condition, it is necessary to evaporate and sputter a metal coating on a surface of the two-dimensional sub-wavelength structure. A metal material used is one or more of gold, silver, copper, aluminum, iron, tin, zinc, nickel, chromium, etc. In some embodiments, an aluminum coating is evaporated, with a thickness of 30nm. A single or multi-layer dielectric layer is also able to be evaporated. A dielectric material used is selected from MgF₂, SiO₂, Al₂O₃, MgO, PMMA, TiO₂, ZnS and ZnO, and a multi-layer dielectric film usually adopts a high-low-high film system design. In some embodiments, SiO₂ is configured for evaporating a three-layer structure, and a light change color is yellow to green. In a region covered with the two-dimensional sub-wavelength structure, the light change color is red to green; and in an uncovered region, the light change color is yellow to green.

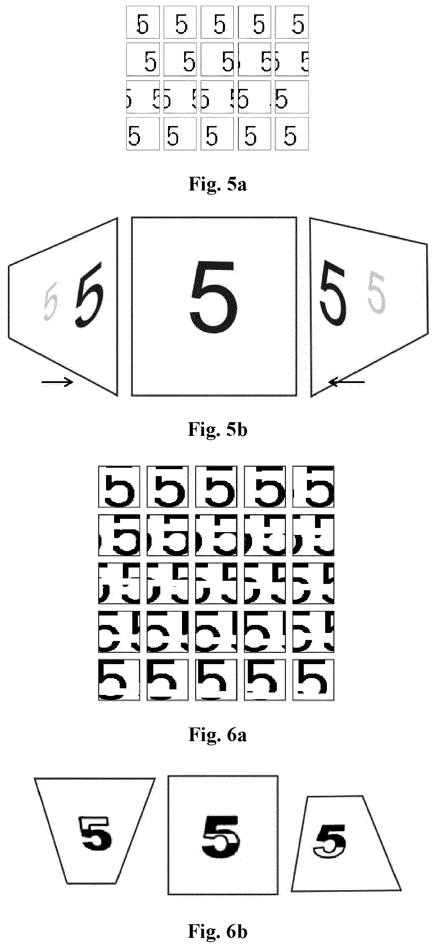

Figs. 5a-5b respectively show a micro graphic-text array and a macro reproduction diagram of an optical anti-counterfeiting element according to an embodiment of the present invention when an optical feature effect is translation change. The optical anti-counterfeiting element includes a reflective curved mirror array in periodical arrangement, having a symmetry axis in at least one direction; and a micro graphic-text array in periodical arrangement. The micro graphic-text array has a symmetry axis in at least one direction, which is parallel to a symmetry axis of the reflective curved mirror array. A visual image effect of the provided x-axis is only schematically provided in the figure, that is, a translation process of a visual image, that is, in a process of changing an observation angle along a positive direction or a reverse direction of the X axis, the visual image will revert to a repeated translation process of the visual image, as shown in Fig. 5a. Fig. 5b shows an optical translation effect feature when the optical anti-counterfeiting element swings left and right, and up and down in the human eyes.

It should be noted that in order to reduce an influence of ghost and increase a definition of a macro synthesis image, in the embodiment, the one-dimensional cylindrical graphic-text design is adopted, and the reflective curved mirror adopts a design of a two-dimensional spherical curved mirror. In this way, a dynamic feature in a certain dimension is sacrificed, and a probability of missampling and repeated sampling is reduced, so that a number of ghosts is reduced by half and the definition is increased.

In some embodiments, a period of the reflective curved mirror array is 5µm to 200µm. More specifically, the period of the reflective curved mirror array is 25µm adopted in the embodiment. In some embodiments, a line width of the micro graphic-text unit is 0.2µm to 100µm. More specifically, the line width of the micro graphic-text unit is 2µm in the embodiment.

Figs. 6a-6b show a micro graphic-text array and a macro reproduction diagram of an optical anti-counterfeiting element according to an embodiment of the present invention when an optical feature effect is dynamic stripe change. The optical anti-counterfeiting element includes a reflective curved mirror array in periodical arrangement and a micro graphic-text array adopting an aperiodic design, and a micro arrangement of the micro graphic-text array is aperiodic and has no symmetry axis. A visual image effect of the provided y-axis is only schematically provided in the figure, that is, a translation process of a visual image, that is, in a process of changing an observation angle along a positive direction or a reverse direction of the y axis, the visual image will revert to a repeated translation process of the visual image.

It should be noted that a structural design concept similar to that in Fig. 4 is able to be adopted by considering an influence of ghost.

In some embodiments, a period of the reflective curved mirror array is 5µm to 200µm. More specifically, the period of the reflective curved mirror array is 25µm adopted in the embodiment. In some embodiments, a line width of the micro graphic-text unit is 0.2µm to 100µm. More specifically, the line width of the micro graphic-text unit is 2µm in the embodiment.

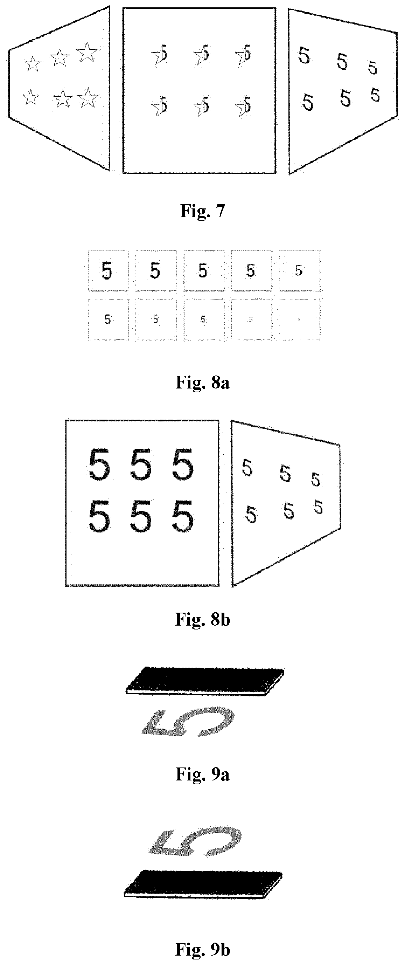

Figs. 7a-7b show a macro reproduction diagram of an optical anti-counterfeiting element according to an embodiment of the present invention when an optical feature effect is graphic-text dynamic change.

The micro graphic-text array in Fig. 5a is designed as a number "5" and a graphic-text "star" respectively, and two original micro graphic-text design diagrams with the same pixel are obtained. Then, a half of the curved mirror unit is configured to sample the number "5" of the micro graphic-text array, and the other half is configured to sample the graphic-text "star" of the micro graphic-text array, so that two micro graphic-text arrays with only a half graphic-text information are combined to obtain an original optical design diagram of Fig. 7. An optical effect feature of micro graphic-text switching is able to be observed when the anti-counterfeiting element swings left and right, and up and down in the human eyes.

Figs. 8a-8b show a micro graphic-text array and a macro reproduction diagram of an optical anti-counterfeiting element according to an embodiment of the present invention when an optical feature effect is zoom change. A micro arrangement of the micro graphic-text array is aperiodic and has no symmetry axis, which is another embodiment of optical effect of the optical principle of Fig. 5a.

Figs. 9a-9b show a micro graphic-text array of an optical anti-counterfeiting element according to an embodiment of the present invention when the optical feature effect is sinking and floating change, a micro arrangement of the micro graphic-text array is periodic, or locally periodic, having a symmetry axis in at least one plane, which is still another embodiment of the optical effect of the optical principle of Fig. 5a.

It should be noted that terms "include" and "contain" or any other variant thereof is intended to cover nonexclusive inclusions herein, so that a process, method, object or device including a series of elements not only includes those elements but also includes other elements which are not clearly listed or further includes elements intrinsic to the process, the method, the object or the device. An element defined by the statement "comprises a..." does not, without more constraints, preclude the existence of additional identical elements in the process, method, article, or apparatus that comprises the element.

The foregoing is merely the embodiments of the present invention and is not intended to limit the present invention. Various modifications and variations of the present invention may be available for those skilled in the art. Any modifications, equivalent replacements, improvements and the like made within the spirit and principle of the present invention shall fall within the scope of claims of the present invention.

## Claims

1. An optical anti-counterfeiting element, comprising:
a substrate (1);
a reflective curved mirror array (21), located on a surface of the substrate (1); and
a micro graphic-text array (22), formed on the reflective curved mirror array (21), the micro graphic-text array (22) and the reflective curved mirror array (21) are located in a same plane and are overlapped without an interval, and after the reflective curved mirror array (21) samples and synthesizes the micro graphic-text array (22) with a coupling effect with the reflective curved mirror array (21), a dynamic effect is formed.

2. The optical anti-counterfeiting element as claimed in claim 1, wherein
the reflective curved mirror array (21) is a periodic array, a local periodic array, an aperiodic array and/or a random array comprising a plurality of curved surface units, and the micro graphic-text array (22) is the periodic array, the aperiodic array or the random array with a coupling effect matched with the reflective curved mirror array (21); or
the reflective curved mirror array (21) is the periodic array, the local periodic array or the aperiodic array comprising the plurality of curved surface units, and the micro graphic-text array (22) is the periodic array, the aperiodic array or the random array with a coupling effect matched with the reflective curved mirror array (21); or
the reflective curved mirror array (21) is the periodic array, the local periodic array or the random array comprising a plurality of curved surface units, and the micro graphic-text array (22) is the periodic array, the aperiodic array or the random array with a coupling effect matched with the reflective curved mirror array (21).

3. The optical anti-counterfeiting element as claimed in claim 1, wherein
a reflective curved mirror of the reflective curved mirror array (21) comprises a concave mirror and a convex mirror; or
the reflective curved mirror of the reflective curved mirror array (21) comprises the concave mirror; or
the reflective curved mirror of the reflective curved mirror array (21) comprises the convex mirror.

4. The optical anti-counterfeiting element as claimed in claim 1, wherein a base of a reflective curved mirror of the reflective curved mirror array (21) is one or any combination of the following: circular, elliptical, polygonal, or infinitely extending in a direction within a surface.

5. The optical anti-counterfeiting element as claimed in claim 1, wherein a cross section of a reflective curved mirror of the reflective curved mirror array (21) is one or any combination of the following: circular, elliptical, polygonal, serrated, parabolic and sinusoidal.

6. The optical anti-counterfeiting element as claimed in claim 1, wherein the reflective curved mirror array (21) is one-dimensional or two-dimensional.

7. The optical anti-counterfeiting element as claimed in claim 1, wherein a micro graphic-text unit of the micro graphic-text array (22) is a groove, a plane or a protrusion.

8. The optical anti-counterfeiting element as claimed in claim 7, wherein a microstructure is distributed in the groove or on the protrusion, so that a light reflection intensity contrast is generated between a micro graphic-text region and a reflective curved mirror region.

9. The optical anti-counterfeiting element as claimed in claim 8, wherein the microstructure is any one of the following: a one-dimensional submicro structure, a two-dimensional submicro structure and a structural color (42).

10. The optical anti-counterfeiting element as claimed in claim 7, wherein when the micro graphic-text unit is the groove or the protrusion, a cross section of the micro graphic-text unit is any one of the following: rectangle, serrate, triangle, sinusoidal waveform.

11. The optical anti-counterfeiting element as claimed in claim 7, wherein the optical anti-counterfeiting element further comprises a first color function layer and a second color function layer respectively located on the micro graphic-text array (22) and the reflective curved mirror array (21).

12. The optical anti-counterfeiting element as claimed in claim 11, wherein
in the case that the micro graphic-text unit of the micro graphic-text array (22) is the groove or the protrusion, colors of the first color function layer and the second color function layer are the same or different; or
in the case that the micro graphic-text unit in the micro graphic-text array (22) is the plane, colors of the first color function layer and the second color function layer are different.

13. The optical anti-counterfeiting element as claimed in claim 11, wherein
the first color function layer and the second color function layer have a diffractive optically variable feature, an interferential optically variable feature, a micro-nano structure feature, a printing feature, a partial metallization feature, a fluorescence feature and/or a magnetic, optical, electrical and radioactive feature configured for machine reading; or
the first color function layer and the second color function layer have the diffractive optically variable feature, the interferential optically variable feature, the micro-nano structure feature, the printing feature, the partial metallization feature, and the fluorescence feature; or
the first color function layer and the second color function layer have the diffractive optically variable feature, the interferential optically variable feature, the micro-nano structure feature, the printing feature, the partial metallization feature, and the magnetic, optical, electrical and radioactive feature configured for machine reading.

14. The optical anti-counterfeiting element as claimed in claim 1, further comprising:
a reflective layer (23), located on the micro graphic-text array (22) and the reflective curved mirror array (21).

15. The optical anti-counterfeiting element as claimed in claim 14, wherein the reflective layer (23) is one or any combination of the following: a mono-layer metal coating, a multi-layer metal coating, a coating formed by an absorption sublayer, a low refractive index dielectric sublayer and a reflective sublayer, a coating with high refractive index dielectric layer, a coating of multi-dielectric sublayer formed by a first high refractive index dielectric sublayer, the low refractive index dielectric sublayer and a second high refractive index dielectric sublayer stacked in sequence, and a coating formed by the absorption sublayer, a high refractive index dielectric sublayer and the reflective sublayer stacked in sequence.

16. The optical anti-counterfeiting element as claimed in claim 1, wherein a period of the reflective curved mirror array (21) is 5µm to 200µm.

17. The optical anti-counterfeiting element as claimed in claim 1, wherein a line width of the micro graphic-text unit in the micro graphic-text array (22) is 0.2µm to 100µm.

18. The optical anti-counterfeiting element as claimed in claim 1, wherein the substrate (1) is a colored or colorless film transparent to visible light composed of one or more of the following materials: polyethylene terephthalate, polyvinyl chloride, polyethylene, polycarbonate, polypropylene, metal, glass and paper.

19. An optical anti-counterfeiting product, comprising the optical anti-counterfeiting element as claimed in any one of claims 1-18.
